# EUROPEAN PATENT APPLICATION

(11) **EP 4 729 153 A1**
(43) Date of publication of application: **22.04.2026**
(21) Application number: 23941736.3
(22) Date of filing: 12.10.2023
(51) Int. Cl.: B01D 53/14

(54) **CARBON DIOXIDE CAPTURE SYSTEM**

(30) Priority: 16.06.2023 KR 20230077445; 16.06.2023 KR 20230077760; 27.09.2023 KR 20230130911
(71) Applicant: Carbonvalue Co., Ltd., Busan 48058 (KR); Ulsan National Institute of Science and Technology (UNIST), Eonyang-eup Ulju-gun Ulsan 44919 (KR)
(72) Inventor: BRIGLJEVIC, Boris, Ulju-gun, Ulsan 44924 (KR); SENGODA MUDHALIYAR PARAMANANTHAM, Salaisargunan, Ulju-gun, Ulsan 44922 (KR); BYUN, Man Hee, Ulju-gun, Ulsan 44924 (KR); LIM, Han Kwon, Ulju-gun, Ulsan 44919 (KR); OH, Hyeon Woo, Busan 48454 (KR); KIM, A Yeon, Ulju-gun, Ulsan 44951 (KR); CHOE, Chang Gwon, Ulju-gun, Ulsan 44951 (KR); LEE, Ae Jin, Ulsan 44240 (KR)
(74) Representative: Appleyard Lees IP LLP
(86) International application number: PCT/KR2023/015768
(87) International publication number: WO 2024/257954

(57) **Abstract**

An embodiment of the present disclosure provides a carbon dioxide capture system including: an absorption module configured to mix carbon dioxide gas with an absorbent to form a rich solution, and discharge the formed rich solution; and a regeneration module configured to receive the discharged rich solution and recover carbon dioxide from the rich solution, wherein at least one of the absorption module and the regeneration module includes a rotary structure.

## Description

### Technical Field

The present disclosure relates to a carbon dioxide capture system.

### Background Art

Many technologies, such as a chemical absorption method, an adsorption method, a membrane separation method, or a cryogenic method, have been developed to reduce carbon dioxide, which is an acid gas in exhaust gas. Among them, the chemical absorption method involves absorbing and capturing carbon dioxide by using an absorbent solution, and has been widely adopted due to its relatively high efficiency and process stability.

Here, the chemical absorption method employs dissolving carbon dioxide in a solvent or a solution (an absorbent) at a first location to bind the carbon dioxide with the absorbent, moving the solvent or solution in which the carbon dioxide is dissolved to a second location, and then separating the carbon dioxide from the solvent or solution at the second location.

However, related-art carbon dioxide capture systems require large-scale equipment, such as tall towers exceeding several tens of meters in height, and suffer from insufficient solubility of carbon dioxide in an absorbent during a process of absorbing carbon dioxide. In addition, in a process of separating carbon dioxide from the absorbent containing absorbed carbon dioxide, insufficient evaporation of the solution occurs, which leads to degradation of process efficiency as the carbon dioxide absorption process is repeated.

Accordingly, there is a need for a carbon dioxide capture system capable of capturing carbon dioxide with high efficiency even on a small scale.

### Disclosure of Invention

### Technical Problem

An objective of the present disclosure is to provide a carbon dioxide capture system that has a compact size and thus may be stably used even in an environment such as a ship.

Another objective of the present disclosure is to provide a regeneration module for capturing carbon dioxide having improved regeneration efficiency and capable of operating at a lower temperature in a process of regenerating a solution having carbon dioxide dissolved therein.

The technical objectives of the present disclosure are not limited to those mentioned above, and other technical objectives not mentioned herein may be clearly understood by those of skill in the art from the descriptions.

### Solution to Problem

According to an embodiment of the present disclosure, there is provided a carbon dioxide capture system including: an absorption module configured to mix carbon dioxide gas with an absorbent to form a rich solution, and discharge the formed rich solution; and a regeneration module configured to receive the discharged rich solution and recover carbon dioxide from the rich solution, wherein at least one of the absorption module and the regeneration module includes a rotary structure.

In addition, in an embodiment of the present disclosure, the carbon dioxide capture system may further include an oxygen remover configured to remove oxygen in the absorbent.

In addition, in an embodiment of the present disclosure, the carbon dioxide capture system may further include a heat exchanger, the rich solution discharged from the absorption module may be transferred to one area of the heat exchanger, a part of the absorbent discharged from the regeneration module may be transferred to one area of the heat exchanger, and heat exchange may occur between the rich solution discharged from the absorption module and the absorbent discharged from the regeneration module.

In addition, in an embodiment of the present disclosure, the absorption module may include: an external absorption housing; and an absorption rotor arranged in one area inside the external absorption housing and configured to rotate within the external absorption housing, and at least one absorption through-hole may be arranged along an outer surface of the absorption rotor.

In addition, in an embodiment of the present disclosure, the regeneration module may include a regeneration unit and a heating unit, the rich solution may be transferred into the regeneration unit, the carbon dioxide is separated from at least a part of the rich solution, and the heating unit may be arranged in one area of the regeneration unit, and configured to receive the rich solution from the regeneration unit and heat the transferred rich solution.

In addition, in an embodiment of the present disclosure, the heating unit may include an ultrasonic irradiation unit arranged in one area inside the heating unit and configured to irradiate the absorbent with ultrasonic waves.

### Advantageous Effects of Invention

According to an embodiment of the present disclosure, it is possible to provide a regeneration module for capturing carbon dioxide, which has higher regeneration efficiency in a process of regenerating a solution having carbon dioxide dissolved therein.

In addition, according to an embodiment of the present disclosure, it is possible to provide a regeneration module for capturing carbon dioxide, which has a compact size and thus may be stably used even in an environment such as a ship.

The effects of the present disclosure are not limited to the foregoing, and should be understood to include all effects that may be inferred from the detailed description of the present disclosure or the configuration described in claims.

### Brief Description of Drawings

FIGS. 1A and 1B are block diagrams illustrating carbon dioxide capture systems according to embodiments.
FIGS. 2A and 2B are conceptual diagrams illustrating an absorption module according to an embodiment.
FIG. 3 is a perspective view illustrating an absorption module according to an embodiment.
FIG. 4 is a cross-sectional view taken along line A-A' of FIG. 3.
FIG. 5A is a conceptual diagram illustrating a regeneration module for capturing carbon dioxide according to an embodiment.
FIG. 5B is a perspective view illustrating a regeneration module for capturing carbon dioxide according to an embodiment.
FIG. 5C is an enlarged view of portion B of FIG. 5B.
FIGS. 6A to 6I are cross-sectional views illustrating regeneration modules for capturing carbon dioxide, according to embodiments.
FIG. 7 is a conceptual diagram illustrating an operating principle of a rotor, according to an embodiment.
FIGS. 8A to 8C are perspective views illustrating a rotor of an absorption module or a regeneration module, according to an embodiment.
FIGS. 9A to 9C are cross-sectional views of a rotor according to an embodiment.

### Best Mode for Carrying out the Invention

According to an embodiment of the present disclosure, there is provided a carbon dioxide capture system including an absorption module configured to mix carbon dioxide gas with an absorbent to form a rich solution, and discharge the formed rich solution, and a regeneration module configured to receive the discharged rich solution and recover carbon dioxide from the rich solution, wherein at least one of the absorption module and the regeneration module includes a rotary structure.

### Mode for the Invention

Hereinafter, the present disclosure will be described with reference to the accompanying drawings. However, the present disclosure may be implemented in various forms, and thus is not limited to the embodiments described herein. In addition, in order to clearly describe the present disclosure, parts irrelevant to the description are omitted in the drawings, and similar reference numerals are assigned to similar elements throughout the present disclosure.

In the drawings, the dimensions of elements may be exaggerated or reduced for convenience of description. For example, the size and thickness of each element depicted in the drawings may be arbitrarily represented for convenience of description, and the following embodiments are not necessarily limited to those depicted.

Terms such as "first," "second," "A," or "B" may be used to describe various elements, but the elements should not be limited by these terms. These terms are used only to distinguish one element from another. For example, without departing from the scope of the present disclosure, a first element may be referred to as a second element, and similarly, a second element may be referred to as a first element. The term "and/or" includes any combination of a plurality of associated listed items or any one of the plurality of associated listed items.

Throughout the present specification, when a part is described as being "connected ("coupled," "joined," or "attached") to another part, the parts may be directly connected to each other, or may be "indirectly connected" to each other with another member therebetween. In addition, when an element "includes" a component, the element may further include other components rather than excluding them, unless otherwise stated.

Terms used herein are for describing particular embodiments, and are not intended to limit the present disclosure. Singular expressions include plural expressions unless the context clearly indicates otherwise.

In the present specification, it is to be understood that the terms such as "comprise," "include," or "have" are used to designate a presence of characteristic, number, stage, operation, element, component, or a combination thereof, and not to preclude a presence or a possibility of adding one or more of other characteristics, numbers, stages, operations, elements, components or a combination thereof.

When an element is described as being "on" or "above" another element, the element may be directly on the other element or intervening elements may be present.

A wet carbon dioxide capture apparatus (or system) provides a liquid capable of dissolving carbon dioxide (hereinafter, referred to as an "absorbent") into contact with carbon dioxide such that the carbon dioxide is absorbed and regenerated while the absorbent circulates in the apparatus.

In addition, an absorbent may refer to both a rich solution containing a high concentration of absorbed carbon dioxide and a lean solution containing a low concentration of absorbed carbon dioxide.

The wet carbon dioxide capture apparatus (or system) includes an absorption module and a regeneration module, wherein the absorption module is configured to mix an absorbent with carbon dioxide to form a rich solution, and the regeneration module is configured to separate carbon dioxide from the rich solution such that the rich solution is converted into a lean solution or an absorbent free of dissolved carbon dioxide.

In the present specification, the term "module" may refer to a unit in which components are coupled, attached, or arranged to form a single entity, and examples thereof include, but are not limited to, an absorption module, an absorption tower, a regeneration module, and a regeneration tower.

However, as described above, related-art carbon dioxide capture apparatuses (or systems) require large-scale equipment, and demand high temperatures or excessive regeneration energy during the regeneration process, and thus have been unable to provide a capture system suitable for operation with low electrical energy, such as on ships.

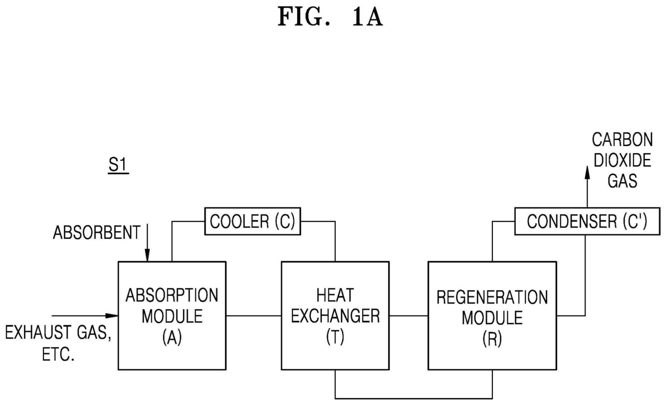

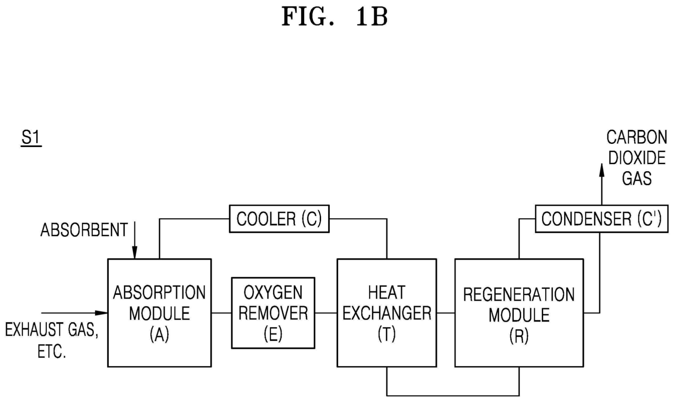

FIGS. 1A and 1B are block diagrams illustrating carbon dioxide capture systems according to embodiments.

Referring to FIGS. 1A and 1B, the present disclosure provides a carbon dioxide capture system S1 (hereinafter, referred to as a "capture system") including an absorption module A and a regeneration module R. Here, at least one of the absorption module A and the regeneration module R may include a rotary structure. The rotary structure (hereinafter, referred to as a "rotor") will be described below in more detail.

The absorption module A may mix carbon dioxide gas with an absorbent to form a rich solution, and discharge the formed rich solution to initiate a process in the capture system S1.

In an embodiment, exhaust gas or flue gas (hereinafter, referred to as "exhaust gas or the like") and an absorbent that absorbs carbon dioxide may be introduced into the absorption module A. Exhaust gas or the like may include waste gases generated as final products of power generation or processes in various industrial fields, and such exhaust gas or the like may contain a large amount of carbon dioxide.

Although not illustrated in the drawings, in an embodiment, the incoming exhaust gas or the like may be introduced after being adjusted to room temperature (15 °C to 25 °C) through a pretreatment cooling process or the like. A process in which carbon dioxide is absorbed into the absorbent in the absorption module A may be an exothermic reaction, and in order to promote such an exothermic reaction, the exhaust gas or the like may be pretreated to room temperature and then introduced into the absorption module A.

In an embodiment, the absorption module A may mix the absorbent with carbon dioxide to form a rich solution and discharge the rich solution, wherein the discharged rich solution may have a temperature of 30 °C to 40 °C. By maintaining the above temperature range, a process may be performed in a lower temperature range in the regeneration module R as will be described below, and furthermore, electric energy consumed for operation of the capture system S1 may be reduced as will be described below.

The regeneration module R may receive the rich solution discharged from the absorption module A and recover carbon dioxide from the rich solution. At this time, carbon dioxide is separated, and the rich solution may form an absorbent (lean solution) containing little or no carbon dioxide.

In an embodiment, the rich solution introduced into the regeneration module R may have a temperature of 40 °C to 70 °C. As will be described below, the capture system S1 according to an embodiment of the present disclosure may induce regeneration of carbon dioxide in a lower temperature range by integrally forming a regeneration unit and a heating unit, and according to another embodiment of the present disclosure, may induce regeneration of carbon dioxide in an even lower temperature range by further including an auxiliary heating component such as an ultrasonic irradiation unit.

Accordingly, by maintaining the above temperature range, regeneration energy in the regeneration module R may be reduced, and further, operating costs of the capture system S1 may be reduced.

In an embodiment, the capture system S1 may further include a heat exchanger T. By further including the heat exchanger T as in the above structure, heat exchange may occur between absorbents circulating in the capture system S1 and having different temperatures according to their circulation sections, and by recycling heat in this way, process efficiency may be further improved.

The heat exchanger T is not particularly limited, and any heat exchanger selectable by a person skilled in the art should be interpreted as falling within the scope of the present disclosure.

In an embodiment, the rich solution discharged from the absorption module A may be transferred to one area of the heat exchanger T, and a part of the absorbent discharged from the regeneration module R may be transferred to one area of the heat exchanger T, such that heat exchange occurs between the rich solution discharged from the absorption module A and the absorbent discharged from the regeneration module R.

Referring to FIG. 1B, in an embodiment, the capture system S1 may further include an oxygen remover E that removes oxygen from an absorbent. Some absorbents cause a side reaction with oxygen to reduce reactivity with carbon dioxide, which may lead to a decrease in process efficiency. Accordingly, a part of the absorbent may react with oxygen to form by-products, which may reduce process efficiency. As in the above structure, by removing oxygen from the absorbent, degradation of process efficiency may be prevented.

The connection position with the oxygen remover E is not particularly limited, and any oxygen remover easily selectable by a person skilled in the art should be interpreted as falling within the scope of the present disclosure.

In an embodiment, one area of the oxygen remover E may be connected to one area of the absorption module A, and another area of the oxygen remover E may be connected to the heat exchanger T. As in the above structure, oxygen may be removed from the absorbent discharged as a rich solution from the absorption module A, and then the absorbent may be introduced into the heat exchanger T. In addition, the present disclosure is not limited thereto, and one area of the oxygen remover E may be connected to the heat exchanger T, and another area of the oxygen remover E may be connected to the regeneration module R.

Referring again to FIGS. 1A and 1B, in an embodiment, the capture system S1 may include a cooler C. The absorbent passing through the heat exchanger as a lean solution may be re-introduced into the absorption module, and by repeatedly circulating the absorbent in the capture system S1 in this way, process efficiency may be improved, and process costs may be reduced.

Here, the absorbent passing through the heat exchanger T as a lean solution may require additional cooling, and by further including the cooler C as in the above structure, the absorbent as a lean solution may be formed at a lower temperature, and further, the absorbent as a lean solution may be introduced at a lower temperature into the absorption module A where an exothermic reaction occurs, thereby further improving process efficiency.

Referring again to FIGS. 1A and 1B, in an embodiment, the capture system S1 may include a condenser C'. Gas discharged from the regeneration module R contains both carbon dioxide gas and gaseous absorbents. Here, the condenser C' may liquefy the gaseous absorbents and recirculate the liquefied absorbents to a regeneration tower, and through this process, the carbon dioxide regeneration yield in the regeneration module R may be improved.

The condenser C' is not particularly limited, and any condenser easily selectable by a person skilled in the art should be interpreted as falling within the scope of the present disclosure.

Hereinafter, the absorption module A according to an embodiment will be described.

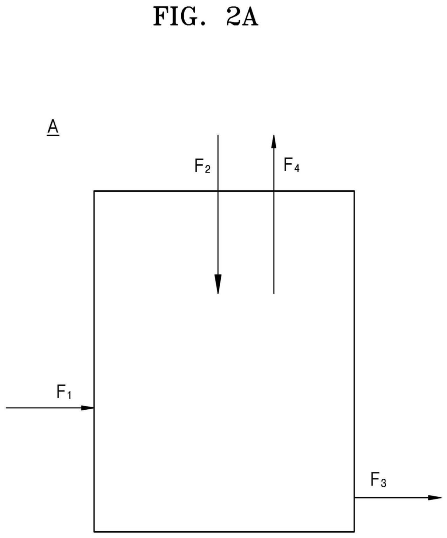

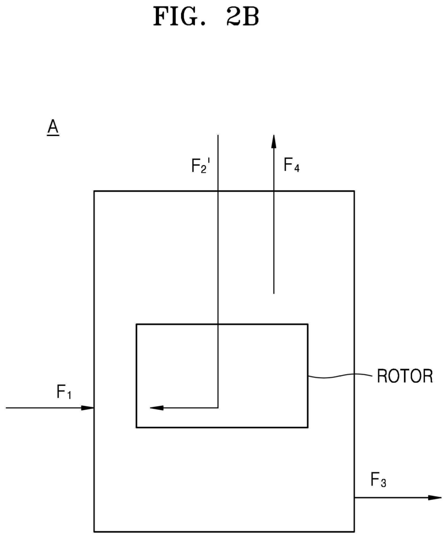

FIGS. 2A and 2B are conceptual diagrams illustrating an absorption module according to an embodiment.

Referring to FIG. 2A, in an embodiment, the absorption module A may allow exhaust gas or the like to be introduced through one side area of the absorption module A (F₁), and allow an absorbent to be introduced into the absorption module A through an upper area of the absorption module A (F₂). Here, referring to FIG. 2B, as will be described below, the absorbent may pass through a rotor arranged in the absorption module A, and the absorbent passing through the rotor may be converted into droplets. In addition, converting the absorbent into droplets in this way may increase the effective collision area. As the effective collision area of the absorbent is increased as in the above structure, the amount of carbon dioxide dissolved in the absorbent may also be increased, and further, process efficiency of the capture system S1 may be improved.

In addition, in an embodiment, the absorbent that has become a rich solution by absorbing carbon dioxide from the exhaust gas or the like may be discharged through one area of the absorption module A (F₃). Here, in an optional embodiment, the exhaust gas or the like from which carbon dioxide has been removed may be discharged to the outside through one area of the absorption module A (F₄).

In an embodiment, the absorbent may include tertiary amines, sterically hindered amines, polyamines, carbonate buffer salts, and/or water (optionally, deionized water); optionally, water may be included in an amount of 10 wt% to 70 wt%. However, the present disclosure is not limited to the above examples, and any liquid capable of readily dissolving carbon dioxide should be interpreted as falling within the scope of the present disclosure.

In an embodiment, one or more additives may be added to the dissolving liquid to improve solubility of carbon dioxide, and such additives are not particularly limited.

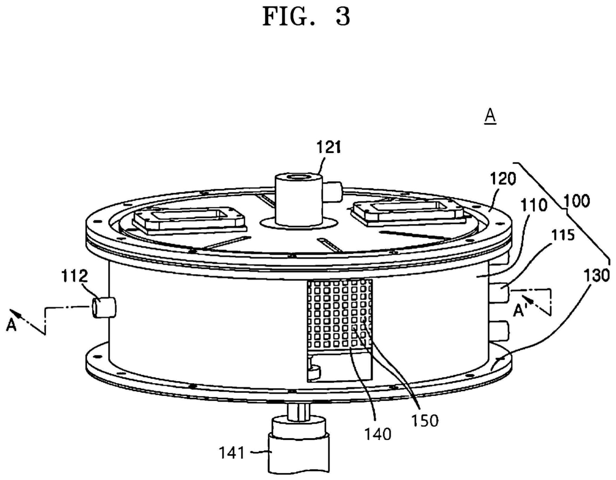

FIG. 3 is a perspective view illustrating an absorption module according to an embodiment.

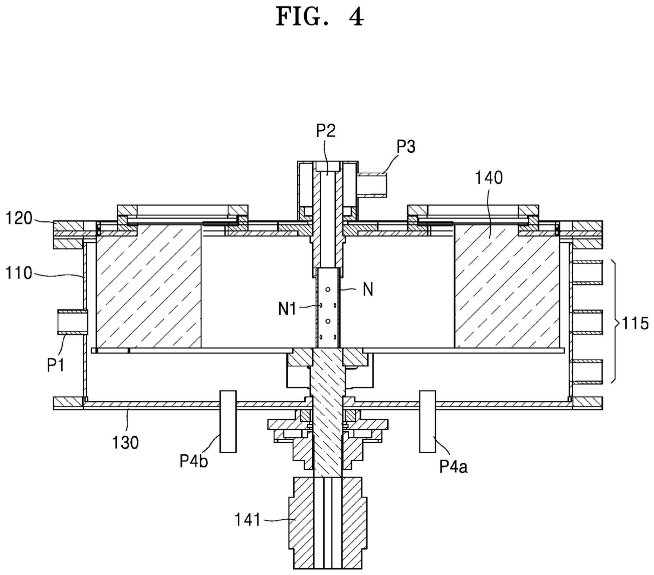

FIG. 4 is a cross-sectional view taken along line A-A' of FIG. 3.

Referring to FIGS. 3 and 4, in an embodiment, the absorption module A may include an external absorption housing 100, and an absorption rotor 140 arranged in one area inside the external absorption housing 100 and rotating within the external absorption housing 100, wherein at least one through-hole may be arranged along an outer surface of the absorption rotor 140.

Here, in an optional embodiment, a power transfer part 141 that transmits power to the absorption rotor 140 to rotate the absorption rotor 140 may be included. The absorption rotor 140 receiving power from the power transfer part 141 may rotate, and the absorbent introduced into the absorption rotor 140 may be sprayed to the outside of the absorption rotor 140 through absorption through-holes 150 formed along one area of the absorption rotor 140. A detailed structure and effects of the absorption rotor 140 will be described below.

Referring again to FIG. 3, in an embodiment, the external absorption housing 100 may include a first absorption housing 110 arranged above a side surface of the absorption rotor 140, and a second absorption housing 120 and a third absorption housing 130 that are arranged in a direction intersecting the first absorption housing 110.

In an embodiment, the second absorption housing 120 and the third absorption housing 130 may be arranged in a direction perpendicular to the first absorption housing 110, and may be arranged on and below the first absorption housing 110, respectively. By providing the external absorption housing 100 divided into the first absorption housing 110, the second absorption housing 120, and the third absorption housing 130 as in the above structures, the absorption rotor 140 arranged inside the external absorption housing 100 may be managed more efficiently.

Referring again to FIGS. 3 and 4, in an embodiment, the external absorption housing 100 may include a first absorption pipe P1. The exhaust gas or the like containing carbon dioxide may be injected into the external absorption housing 100 through the first absorption pipe P1. Here, in an optional embodiment, the first absorption pipe P1 may be arranged on one side surface of the first absorption housing 110.

By adopting the above structure, the exhaust gas or the like containing carbon dioxide may be injected into the external absorption housing 100 in a direction intersecting a rotation direction of the absorption rotor 140. Accordingly, the absorbent ejected from an inner area of the absorption rotor 140 to an outer area of the absorption rotor 140 may collide with the exhaust gas or the like over a larger area, thereby improving solubility of carbon dioxide into a dissolving liquid. Here, in an optional embodiment, the exhaust gas or the like may be injected into the external absorption housing 100 in a direction perpendicular to the rotation direction of the absorption rotor 140.

In an embodiment, the first absorption pipe P1 may include one or more absorption pipes (not shown). According to the installation location and scale of the absorption module A, the number of first absorption pipes P1 may be adjusted, and by adjusting the number of first absorption pipes P1, the amount of exhaust gas or flue gas injected into the external absorption housing 100 may be adjusted.

Referring again to FIG. 4, in an embodiment, the external absorption housing 100 may include a second absorption pipe P2. A dissolving liquid may be injected into the external absorption housing 100 through the second absorption pipe P2. In addition, as an optional example, the second absorption pipe P2 may be arranged in one area of the second absorption housing 120. The second absorption pipe P2 may be arranged in a direction intersecting a wide surface of the second absorption housing 120 to inject a fluid into the external absorption housing 100.

In an embodiment, a first absorption nozzle N may be arranged at one end of the second absorption pipe P2. Here, at least one first absorption nozzle hole N1 may be arranged in the longitudinal direction of the first absorption nozzle N. By adopting the above structure, the dissolving liquid may be injected into the external absorption housing 100 through the second absorption pipe P2, and may be sprayed from the absorption nozzle hole N1 via the first absorption nozzle N.

In an embodiment, one end of the second absorption pipe P2 may be arranged to be adjacent to or penetrate into a central area of the absorption rotor 140. By adopting the above structure, the absorbent may be injected into the central area of the rotor via the second absorption pipe P2.

In an embodiment, the first absorption nozzle N may be arranged at one end of the second absorption pipe P2. Here, as an optional example, the first absorption nozzle N may be provided with the first absorption nozzle hole N1 along the longitudinal direction thereof, and the first absorption nozzle N may be arranged in a central area of the absorption rotor 140.

By adopting the above structure, the dissolving liquid may be injected into the central area of the rotor via the second absorption pipe P2, and the dissolving liquid may be sprayed from an inner area toward an outer area of the absorption rotor 140 through the absorption nozzle hole N1. Through the above process, the absorbent may be sprayed to the outside of the absorption rotor 140 through the absorption through-holes 150 arranged on a surface of the absorption rotor 140.

Referring again to FIGS. 3 and 4, in an embodiment, the external absorption housing 100 may include a third absorption pipe P3. As the exhaust gas or the like injected into the external absorption housing 100 collides with the absorbent, carbon dioxide is removed, and the exhaust gas or the like from which carbon dioxide has been removed in this way is discharged to the outside of the external absorption housing 100 through the third absorption pipe P3.

In an embodiment, the third absorption pipe P3 may be arranged in an upper area of the external absorption housing 100. Because exhaust gas or flue gas from which carbon dioxide has been removed and of which temperature is increased tends to move in an upward direction, the exhaust gas or the like may be more effectively removed from the inside of the external absorption housing 100 by arranging the third absorption pipe P3 in the upper area of the external absorption housing 100. Here, as an optional example, the third absorption pipe P3 may be arranged in one area of the second absorption housing 120 that is arranged above the absorption rotor 140.

Referring again to FIG. 4, in an embodiment, the external absorption housing 100 may include fourth absorption pipes P4a and P4b arranged in a lower area thereof. Here, in an optional embodiment, the fourth absorption pipes P4a and P4b may be arranged in one area of the third absorption housing 130.

The absorbent introduced into the external absorption housing 100 through the second absorption pipe P2 may come into contact with the exhaust gas or the like to dissolve carbon dioxide therein, and the absorbent having carbon dioxide dissolved therein in this way may be discharged to the outside of the external absorption housing 100 through the fourth absorption pipes P4a and P4b.

By including the fourth absorption pipes P4a and P4b arranged in a lower area of the third absorption housing 130 as in the above structure, the absorbent may be more efficiently discharged to the outside of the external absorption housing 100. Here, although FIG. 3 illustrates an embodiment in which a plurality of fourth absorption pipes are provided, one fourth absorption pipe may be provided, or three or more fourth absorption pipes may be provided, and as such, the number of fourth absorption pipes is not particularly limited.

A more detailed and specific description of the absorption rotor 140 will be provided below.

Hereinafter, the regeneration module R according to an embodiment will be described.

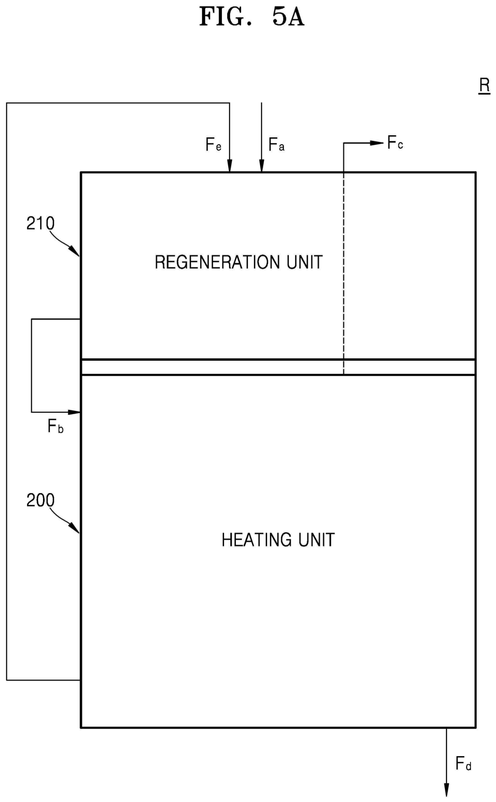

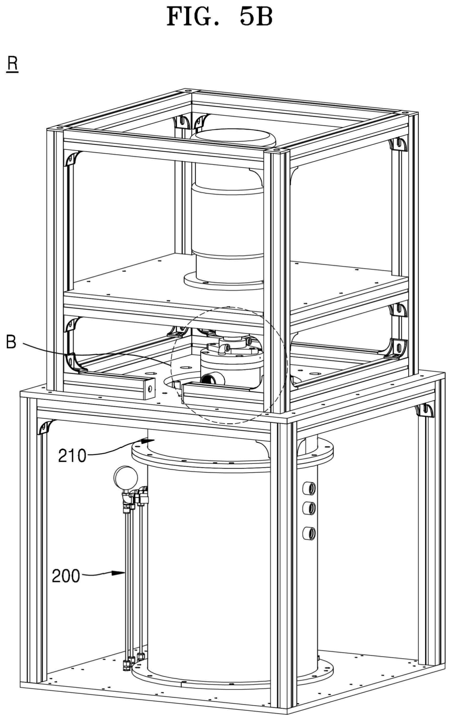

FIG. 5A is a conceptual diagram illustrating a regeneration module for capturing carbon dioxide according to an embodiment. FIG. 5B is a perspective view illustrating a regeneration module for capturing carbon dioxide according to an embodiment.

Referring to FIGS. 5A and 5B, in an embodiment, the regeneration module R may include a heating unit 200 and a regeneration unit 210 arranged in one area of the heat ing unit 200.

By arranging the regeneration unit 210 to be adjacent to one area of the heat ing unit 200 as in the above structure, it is possible to provide the regeneration module on a small or medium scale, unlike related-art regeneration towers. In addition, in an optional embodiment, the regeneration module R may be formed in a compact configuration, enabling application across various industrial fields and customization to meet the size or scale requirements of each field.

In an embodiment, the regeneration unit 210 may be arranged to be adjacent to the heating unit 200. In addition, as an optional example, the regeneration unit 210 and the heating unit 200 may be arranged to be adjacent to each other as in the above structure, and may be coupled to each other by an attachment and/or coupling method. Through the above structure, efficiency problems, such as heat loss occurring during transfer between the heating unit 200 and the regeneration unit 210 may be reduced, and the regeneration module R capable of operating more stably even in an environment such as a ship where the regeneration module R is used may be provided.

In an embodiment, as the attachment and/or coupling method, for example, methods such as a method of welding between components or a method of screw coupling may be used, but the present disclosure is not limited to the above examples, and any attachment and/or coupling method easily selectable by a person skilled in the art should be interpreted as falling within the scope of the present disclosure.

An operation process of the regeneration module R according to embodiments will be described with reference to FIG. 5A. First, the absorbent discharged from the absorption module A and having carbon dioxide absorbed therein may be transferred into the regeneration unit 210 (Fₐ). In the regeneration module R according to an embodiment of the present disclosure, carbon dioxide may be primarily separated from at least a part of the absorbent having carbon dioxide absorbed therein, within the regeneration unit 210 through a physical method. A more detailed description of the regeneration unit 210 of embodiments for this process will be provided below.

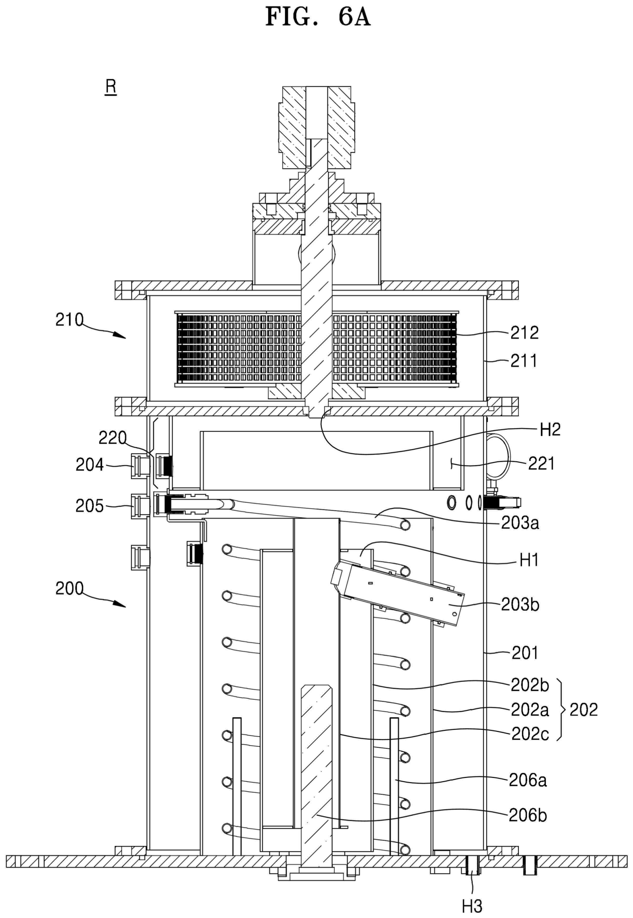

Referring again to FIG. 5A, subsequently, the absorbent transferred to the regeneration unit 210 may be transferred to the heating unit 200 (F_{b}). In this process, a buffer part 220 (see FIG. 6A) may be further included such that the regeneration module R operates in a steady state, and a more detailed description of the buffer part 220 will also be provided below. In addition, in the heating unit 200, the absorbent may be heated through a heating part, and through this process, carbon dioxide dissolved in the absorbent may be separated through a chemical method.

Here, the separated carbon dioxide may be discharged from the heating unit 200 (F_{c}), and the absorbents heated in the heating unit 200 may be discharged from the heating unit 200 (F_{d}).

Here, in an optional embodiment, the discharged carbon dioxide may be transferred to a carbon dioxide processing apparatus (not shown), and in another optional embodiment, the discharged absorbents may be subsequently directed back to the absorption module A to dissolve carbon dioxide again within the absorption module A. In another optional embodiment, the absorbents may be directed back to the regeneration unit 210 (Fₑ), and through this process, operation may be performed with lower regeneration energy in a carbon dioxide separation process.

In addition, referring again to FIG. 5A, in an optional embodiment, the separated carbon dioxide may be discharged from the heating unit 200 via one area in the regeneration unit 210 (F_{c}).

In addition, the heating unit 200 may further include an ultrasonic irradiation unit (not shown), and the absorbent injected into the heating unit 200 may be irradiated with ultrasonic waves through the ultrasonic irradiation unit (not shown). When the absorbent in a liquid state is irradiated with ultrasonic waves in this way, an acoustic cavitation phenomenon may occur in areas of the absorbent. Through this, a chemical reaction is promoted in the absorbent having carbon dioxide dissolved therein, and carbon dioxide may be separated with a higher yield.

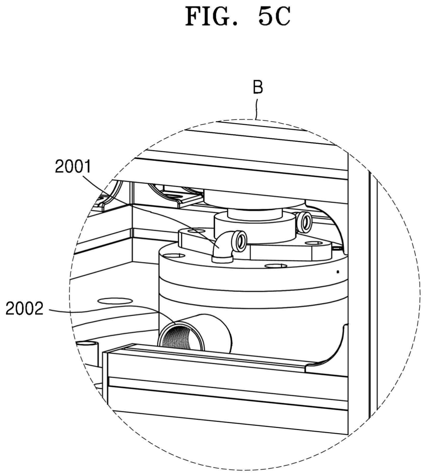

FIG. 5C is an enlarged view of portion B of FIG. 5B. FIGS. 6A to 6I are cross-sectional views illustrating regeneration modules for capturing carbon dioxide, according to embodiments.

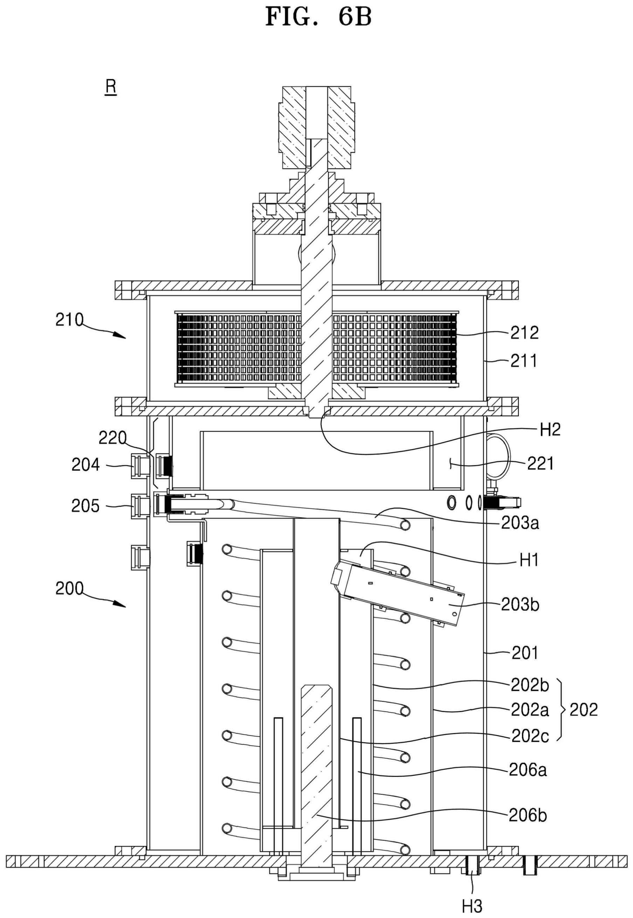

Referring to FIGS. 6A and 6B, in an embodiment, the regeneration unit 210 may include a regeneration unit housing 211 including an accommodation space therein, and a porous regeneration rotor 212 (hereinafter, referred to as a "rotor") arranged inside the regeneration unit housing 211. In addition, the regeneration rotor 212 may include regeneration through-holes formed at least on an exterior thereof.

Referring to FIG. 5C, one area of the regeneration unit 210 may include a first regeneration unit pipe 2001 through which an absorbent moves, and a second regeneration unit pipe 2002 through which carbon dioxide moves, and in an optional embodiment, at least one of the first regeneration unit pipe 2001 and the second regeneration unit pipe 2002 may be arranged in an upper area of the regeneration unit 210.

In an embodiment, the size and shape of the first regeneration unit pipe 2001 are not particularly limited, provided that they are sufficient to allow the flow of a liquid absorbent. Similarly, the size and shape of the second regeneration unit pipe 2002 are not particularly limited, provided that they are sufficient to allow the flow of gaseous carbon dioxide.

In an embodiment, the absorbent may be introduced into the regeneration unit 210 through the first regeneration unit pipe 2001 arranged in one area of the regeneration unit 210, and as an optional example, may be directed to a central area of the regeneration rotor 212 arranged in the regeneration unit 210. The second regeneration unit pipe 2002 will be described below. The absorbent directed to the central area of the regeneration rotor 212 in this way may be discharged from the central area of the regeneration rotor 212 to the outside of the regeneration rotor 212 by centrifugal force while the regeneration rotor 212 rotates.

During discharge from the central area of the regeneration rotor 212 to the outside as described above, the absorbent collides with areas near the regeneration through-holes of the regeneration rotor 212, forming individual droplets and enabling carbon dioxide regeneration. As described above, embodiments of the present disclosure may provide an effect of directing the absorbent into the regeneration unit 210 such that carbon dioxide is primarily separated through a chemical method or desorption. A more detailed and specific description of the regeneration rotor 212 will be provided below.

Referring again to FIGS. 6A and 6B, in an embodiment, the absorbents that have passed through the regeneration unit 210 may be directed to the buffer part 220. During the operation of the regeneration module R, the buffer part 220 serves to maintain a steady state in which the flow rate of absorbents introduced into the heating unit 200 is equal to the flow rate of absorbents discharged from the heating unit 200.

The buffer part 220 may be arranged inside a heating external housing 201 to be described below. In an optional embodiment, the buffer part 220 may include an accommodation space 221 to which the absorbent is transferred, in an upper area of the heating external housing 201. Here, a pipe (not shown) to which a first external pipe 204 is connected may be arranged at a predetermined height from the bottom of the accommodation space 221.

By arranging the first external pipe 204 at a predetermined height from the bottom of the accommodation space 221 as in the above structure, at least a part of the absorbent transferred from the regeneration unit 210 may remain in the accommodation space 221 below the height where the first external pipe 204 is located.

By allowing at least a part of the absorbents to have a residence time in the regeneration module R in this way, the amount of absorbents introduced into the heating unit 200 may be controlled, and further, the processing rate of the entire regeneration module R may be controlled.

In an embodiment, the first external pipe 204 and a second external pipe 205 may be connected to each other via a pump (not shown). Through the above structure, the absorbents may be transferred to the second external pipe 205 through the first external pipe 204, and further, a process in the heating unit 200 may be seamlessly performed.

Referring again to FIGS. 6A and 6B, in an embodiment, the heating unit 200 may include an external heating housing 201 and an internal heating housing 202 arranged inside the external heating housing 201. The external heating housing 201 may serve as an outer cover of the heating unit 200, and various components to be described below may be arranged in areas inside the external heating housing 201. In addition, the internal heating housing 202 may include one or more housings, and a space may be formed between the housings.

In an embodiment, at least a part of an upper area of the external heating housing 201 may be open. The regeneration unit 210 may be arranged in an upper area of the heating unit 200, and through this structure, the absorbents transferred into the regeneration unit 210 through the first regeneration unit pipe 2001 may be transferred to one area of the heat ing unit 200 without a separate pipe.

In an optional embodiment, at least another part of the upper area of the external heating housing 201 may be open. Through this, carbon dioxide desorbed or generated in the heating unit 200 may be transferred to one area of the regeneration unit 210 without a separate pipe. Here, referring again to FIG. 5C, carbon dioxide transferred to one area of the regeneration unit 210 may be discharged to the outside of the regeneration unit 210 through the second regeneration unit pipe 2002.

In an embodiment, after being discharged from the regeneration unit 210, the absorbent may be directed to the buffer part 220 arranged inside the external heating housing 201. As described above, by allowing the absorbent to be directed to the buffer part 220, the processing rate in the heating unit 200 may be controlled.

In an embodiment, after being discharged from the regeneration unit 210, the absorbent may be transferred into the internal heating housing 202 of the heating unit 200 through a pipe. Here, in an optional embodiment, the absorbent may be directly transferred to a lower area in the internal heating housing 202 through a first internal pipe 203a.

In an embodiment, the second external pipe 205 may be arranged in an outer area of the external heating housing 201, the first internal pipe 203a may be arranged in one area inside the internal heating housing 202, and the second external pipe 205 and the first internal pipe 203a may be in fluid communication with each other. Through the above structure, the absorbent having carbon dioxide dissolved therein (i.e., a rich solution) may be directly injected into one area inside the internal heating housing 202.

In the present specification, "in fluid communication" may refer to a state or relationship in which a fluid located in an arbitrary space is allowed to flow into another space.

In an embodiment, one end of the first internal pipe 203a may be arranged in a lower area within the internal heating housing 202. Through the above structure, the absorbent may be directly transferred to the lower area within the internal heating housing 202 through the first internal pipe 203a. When the regeneration module R operates in a steady state, the absorbent may be pre-heated by high-temperature absorbents surrounding the first internal pipe 203a, as it is transferred to the lower area in the internal heating housing 202. This enables heat recovery within the regeneration module R, thereby reducing power consumption.

In an optional embodiment, the first internal pipe 203a may include a material having high thermal conductivity. By using a material having high thermal conductivity in this way, higher heat may be applied to the absorbents passing through the first internal pipe 203a, and the pre-heating effect may be maximized. Such materials having high thermal conductivity may include, for example, metals or synthetic materials, but are not limited to these examples.

In an embodiment, the internal heating housing 202 may include a first internal housing 202a and a second internal housing 202b arranged in a central area of the first internal housing 202a. Here, the first internal housing 202a may include an inner region facing an inner area, and an outer region arranged in one area opposite to the inner region, and the first internal pipe 203a may be arranged along an inner region of the internal heating housing 202.

In an optional embodiment, the first internal pipe 203a may be arranged along the inner region of the first internal housing 202a. By arranging the first internal pipe 203a along the inner region as in the above structure, other components to be described below may be more stably provided inside the internal heating housing 202.

In an embodiment, the first internal pipe 203a may be arranged in a spiral structure along the inner region of the internal heating housing 202. By arranging the first internal pipe 203a as in the above structure, other components may be more stably provided inside the internal heating housing 202, and furthermore, the total surface area of the first internal pipe 203a arranged in the internal heating housing 202 may be maximized.

In addition, although FIGS. 6A and 6B illustrate only the spiral structure in which the first internal pipe 203a is arranged along the inner region of the internal heating housing 202, the present disclosure is not limited thereto, and the first internal pipe 203a may be arranged along an inner region of the internal heating housing 202, and may be arranged in a form of a coiled pipe.

In an embodiment, the internal heating housing 202 may include the first internal housing 202a and the second internal housing 202b arranged in a central area of the first internal housing 202a. The first internal housing 202a may provide a sufficient accommodation space therein in which the second internal housing 202b, the first internal pipe 203a, heating parts 206a and 206b, and the like may be provided. In addition, the first internal housing 202a may be arranged to be spaced apart from the external heating housing 201 by a predetermined distance, and through this, the absorbent may be directed as will be described below.

In an embodiment, the internal heating housing 202 may include the first internal housing 202a, the second internal housing 202b arranged in a central area of the first internal housing 202a, and a third internal housing 202c arranged in a central area of the second internal housing. By configuring the internal heating housing 202 to include multiple layers of the internal housings 202a to 202c as in the above structure, a moving path of the absorbents may be lengthened within a narrow space in the internal heating housing 202, and through this, the residence time of the absorbent in the regeneration module R may be increased, and the absorbent in the regeneration module R may be heated more efficiently even with low power consumption.

In an embodiment, an upper area of at least one of the first internal housing 202a and the third internal housing 202c may be open. As will be described below, the absorbent may be heated in the internal heating housing 202, and when the absorbent is heated in the internal heating housing 202 to separate carbon dioxide through the above structure, gaseous carbon dioxide may move out of the internal heating housing 202 through the open upper area of the internal heating housing 202.

In an embodiment, the length of the first internal housing 202a in the longitudinal direction may be greater than those of the second internal housing 202b and the third internal housing 202c. Through the above structure, both the second internal housing 202b and the third internal housing 202c may be arranged inside the first internal housing 202a, and further, the absorbent may be prevented from overflowing from the first internal housing 202a, and a moving path of the absorbent may be controlled.

Referring again to FIGS. 6A and 6B, in an embodiment, the second internal housing 202b may include an open area 1 H1 in one area of an upper part thereof. By including the open area 1 H1 as in the above structure, when the absorbent injected into the first internal housing 202a exceeds a predetermined amount, the absorbent may move into the second internal housing 202b through the area 1 H1.

In an embodiment, the third internal housing 202c may be longer than the length of the second internal housing 202b in the longitudinal direction. By adopting the above structure, as described above, when the absorbent is injected into the first internal housing 202a and its level rises in the first internal housing 202a, the absorbent may move into the second internal housing 202b through the open area 1 H1 of the second internal housing 202b, and further, move to the third internal housing 202c arranged in the central area of the second internal housing 202b. A more detailed description of a movement process of the absorbent and carbon dioxide in the internal heating housing 202 will be provided below.

In an embodiment, the third internal housing 202c may include a second internal pipe 203b in an upper area thereof. One end of the second internal pipe 203b may be arranged in one area of a space between the first internal housing 202a and the external heating housing 201. Through the above structure, the absorbent injected into the third internal housing 202c may be discharged into the space between the first internal housing 202a and the external heating housing 201 along the second internal pipe 203b as the liquid level rises in the third internal housing 202c.

By adopting the above structure, a part of the absorbent transferred into the third internal housing 202c may be transferred to one area between the first internal housing 202a and the external heating housing 201, and by measuring the height of the liquid level of the absorbent introduced into the space between the first internal housing 202a and the external heating housing 201, the overall process state in the regeneration module R may be checked.

In an embodiment, the first heating part 206a for heating the absorbent may be arranged in one area inside the internal heating housing 202. Here, in optional embodiments, the first heating part 206a may include heating elements that convert electrical energy into thermal energy.

By enabling the use of electrical energy as in the above structure, the regeneration module R that is versatile and readily usable in various industrial fields may be provided, and in particular, according to the present disclosure, thermal energy may be provided with high efficiency.

In an embodiment, the first heating part 206a may include a heating rod that converts electrical energy into thermal energy. The heating rod is not particularly limited, and any heating rod easily selectable by a person skilled in the art should be interpreted as falling within the scope of the present disclosure. In addition, the heating rod may include a material having high thermal conductivity, and examples of the material include metal materials or silicon carbide, and the material is also not particularly limited.

In an embodiment, the first heating part 206a may be arranged in a lower area inside the internal heating housing 202. As described above, the absorbent may be directed to a lower area of the internal heating housing 202 through the first internal pipe 203a, and through the above structure, the first heating part 206a may heat the pre-heated absorbent, thereby heating the absorbent with higher efficiency.

In an embodiment, the first heating part 206a may be arranged in the first internal housing 202a or the second internal housing 202b.

In an embodiment, the second heating part 206b for heating the absorbent may be included in one area inside the internal heating housing 202. The second heating part 206b may independently heat the absorbent, or may be configured to assist the first heating unit 206a in heating the absorbent.

In an embodiment, the second heating part 206b may be a wave generator that generates waves, and as another example, may include an ultrasonic irradiation unit. By configuring the regeneration module R to include a wave generator as in the above structure, higher efficiency may be provided in heating the absorbent in a liquid state, and further, efficiency of separating carbon dioxide from the absorbent may be improved.

In an embodiment, the second heating part 206b may include a microwave irradiator. Microwaves have high efficiency in applying thermal energy to a liquid or molecular particles, and such components enable the regeneration module R to heat the absorbent with higher efficiency.

In an embodiment, the second heating part 206b may be an ultrasonic irradiation unit. Irradiating a liquid with ultrasonic waves causes an acoustic cavitation phenomenon in the liquid, and through this, a chemical reaction in an absorbent having carbon dioxide dissolved therein is promoted, such that the dissolved carbon dioxide may be separated with a higher yield.

The required size, performance, or the like of such an ultrasonic irradiation unit may vary depending on the industrial field in which the carbon dioxide capture system is used, or the scale of the regeneration module. Here, for example, in a carbon dioxide capture system on a large ship or the like, ultrasonic waves in a frequency range of 10 kHz to 20 kHz may be irradiated, and ultrasonic waves having an intensity of 500 W to 1,000 W may be irradiated.

However, the ultrasonic irradiation unit to be used is not limited to the ultrasonic irradiation unit having the above performance, and any ultrasonic irradiation unit easily selectable by a person skilled in the art should be interpreted as falling within the scope of the present disclosure.

In an embodiment, the second heating part 206b may be arranged inside the third internal housing 202c. The absorbent may be injected into a lower area of the first internal housing 202a, and then transferred into the third internal housing 202c via the second internal housing 202b. Through the above structure, the second heating part 206b may be arranged in a final path on a moving path in the internal heating housing 202, and through this, regeneration efficiency of carbon dioxide may be improved.

In an embodiment, the external heating housing 201 may include an open area H2 in a part thereof. In the external heating housing 201 of the heating unit 200, as the absorbent having carbon dioxide absorbed therein is heated, gaseous carbon dioxide is formed. The gaseous carbon dioxide may be discharged through a hole H2 arranged in one area of the external heating housing 201. Here, for example, the hole H2 may be formed in an upper area of the external heating housing 201, and the carbon dioxide may be separated from the regeneration module R by passing through one area of the regeneration unit 210.

In an embodiment, a hole H3 may be formed in one area of the internal heating housing 202. Through the hole, the absorbents injected into the internal heating housing 202 may be discharged to the outside of the heating unit 200, and through this, the absorbents injected into the heating unit 200 may maintain a steady state.

In addition, at least two holes H3 may be provided, and absorbents having no carbon dioxide absorbed therein and absorbents having carbon dioxide absorbed therein may be separately discharged from the heating unit 200.

The absorbents having no carbon dioxide absorbed therein may be directed back to the absorption module A, thereby recycling the absorbents in the capture system. In addition, the absorbents having carbon dioxide absorbed therein may be transferred again to the regeneration unit 210 in the regeneration module R to be circulated within the regeneration module R.

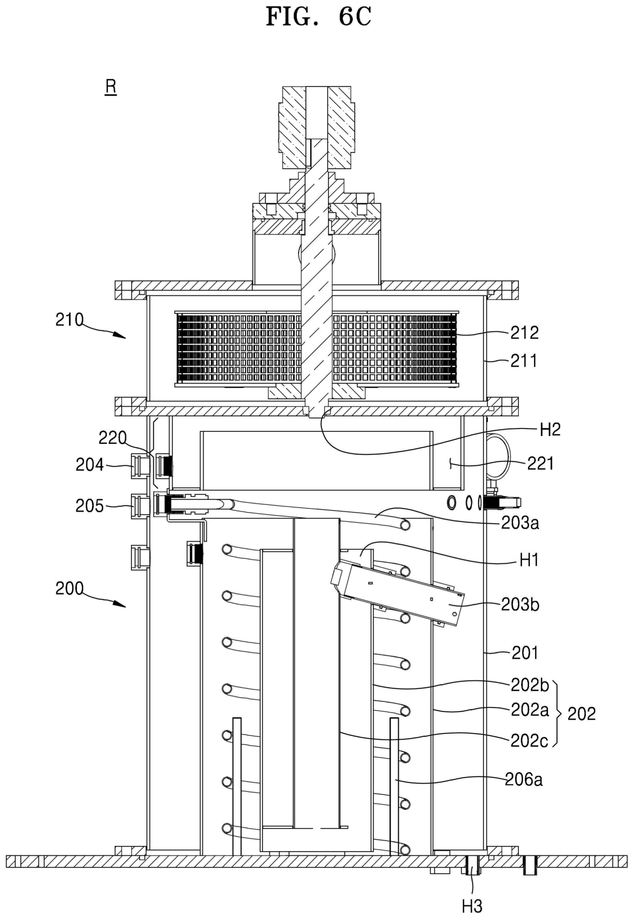

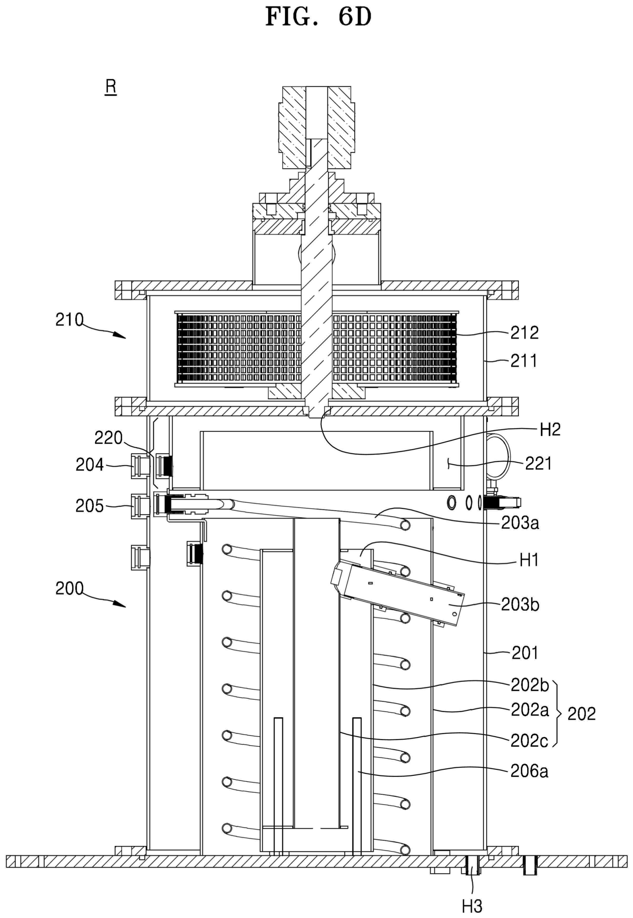

FIGS. 6C and 6D are cross-sectional views illustrating regeneration modules according to other embodiments.

The regeneration modules R according to embodiments illustrated in FIGS. 6C and 6D have the same configuration of as the regeneration modules R illustrated in FIGS. 6A and 6B, except that they do not include the second heating part 206b.

Referring to FIGS. 6A and 6B, in an embodiment, the regeneration module R that does not include the second heating part 206b may be provided, and by arranging the regeneration unit 210 to be adjacent to the heating unit 200 as in the above structure, lost thermal energy may be minimized, and further, regeneration energy may be reduced.

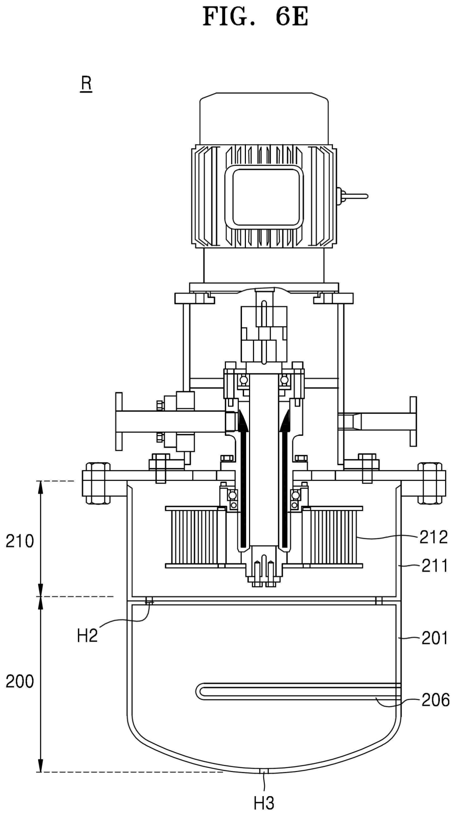

FIGS. 6E to 6I are cross-sectional views illustrating regeneration modules according to other embodiments.

Referring to FIGS. 6E to 6I, in an embodiment, the regeneration module R may include the regeneration unit 210 and the heating unit 200, wherein the regeneration unit 210 is arranged above the heating unit 200.

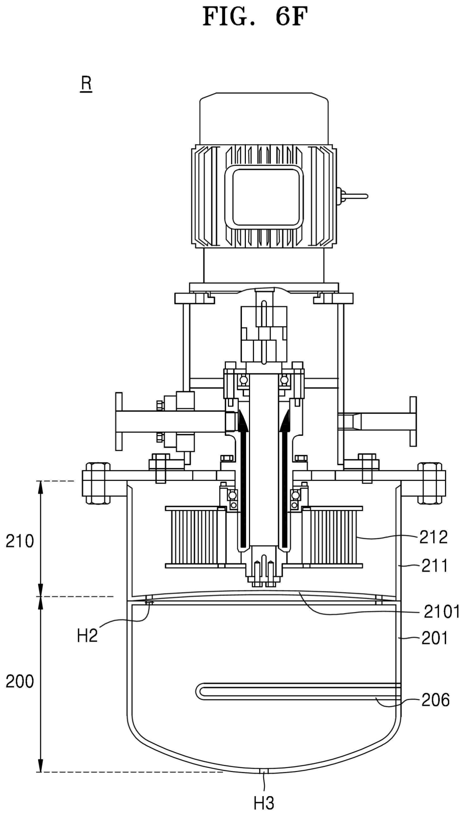

Referring to FIGS. 6E and 6F, in an embodiment, the heating unit 200 may include the external heating housing 201. By omitting a separate structure such as the internal housing 202 as in the above structure, the structure of the heating unit 200 may be simplified. By simplifying the internal configuration of the heating unit 200, a process may be stabilized while the absorbent moves, and furthermore, manufacturing costs of the regeneration module R may be reduced.

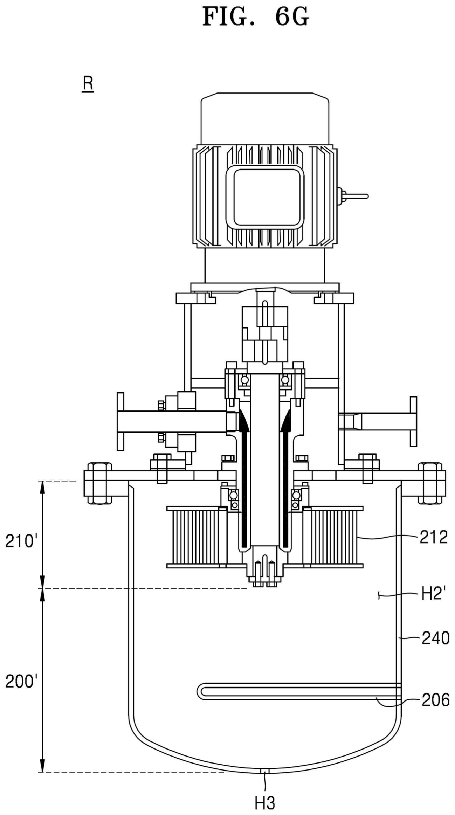

Referring again to FIGS. 6E and 6F, in an embodiment, the heating unit 200 and the regeneration unit 210 may be in fluid communication with each other, and may be arranged inside a single housing 240 as in FIGS. 6G to 6I to be described below. In an optional embodiment, an open area H2 may be included in at least a part of the boundary between the heating unit 200 and the regeneration unit 210. Through the open area H2 as in the above structure, the absorbents passing through the regeneration unit 210 may move into the heating unit 200.

Referring to FIG. 6F, in an embodiment, a lower surface of the regeneration unit 210 may include the open area H2 along an outer region thereof, and a central area 2101 of the lower surface may be convex toward the regeneration rotor 212.

By forming the open area H2 along the outer region of the lower area of the regeneration unit 210 as in the above structure, the absorbents discharged from the regeneration rotor 212 may be allowed to move more readily to the heating unit 200. In addition, by configuring the central area 2101 of the lower area of the regeneration unit 210 to be convex toward the regeneration rotor 212 as in the above structure, the absorbents in the regeneration unit 210 may be induced to move to the outer region of the lower surface of the regeneration unit 210 under gravity, and further, the absorbents may be allowed to move more readily to the heating unit 200.

Referring to FIGS. 6G to 6I, in an embodiment, the regeneration module R may include a regeneration region 210' and a heating region 200', and the regeneration region 210' and the heating region 200' may be arranged in a single housing 240. By arranging the regeneration region 210' and the heating region 200' in the single housing 240 as in the above structure, manufacturing costs of the regeneration module R may be reduced, and stability in the overall operation process of the regeneration module R may be secured.

In an embodiment, the regeneration region 210' may include at least some components of the regeneration unit 210 described above regarding other embodiments, and the heating region 200' may include at least some components of the heating unit 200 described above regarding other embodiments. In addition, for detailed descriptions thereof, reference is made to the foregoing descriptions.

In an embodiment, by including the regeneration region 210' and the heating region 200' in the single housing 240, the absorbents passing through the regeneration rotor 212 of the regeneration region 210' may be transferred to one area of the heat ing region 200' without a separate process. In performing this process, a steady state of the entire regeneration module R may be maintained by appropriately controlling the flow rate of the absorbent introduced into the regeneration region 210'.

In an embodiment, an open area H2' may be included in the boundary between a heating region 200' and a regeneration region 210' in the single housing 240, and the absorbent passing through the regeneration region 210' may be transferred to the heating region 200' through the open area H2' without a separate additional component.

Referring to FIG. 6G, in an embodiment, a heating part 206 may be included in a lower area of the heating region 200'. The absorbent introduced into the heating region 200' may be heated through the heating part 206, and through this, carbon dioxide may be separated. Here, the heating part 206 may include the heating rod that converts electrical energy into thermal energy, which is described above regarding the previous embodiments. In addition, for a more detailed description of the heating rod, reference is made to the descriptions regarding the foregoing embodiments.

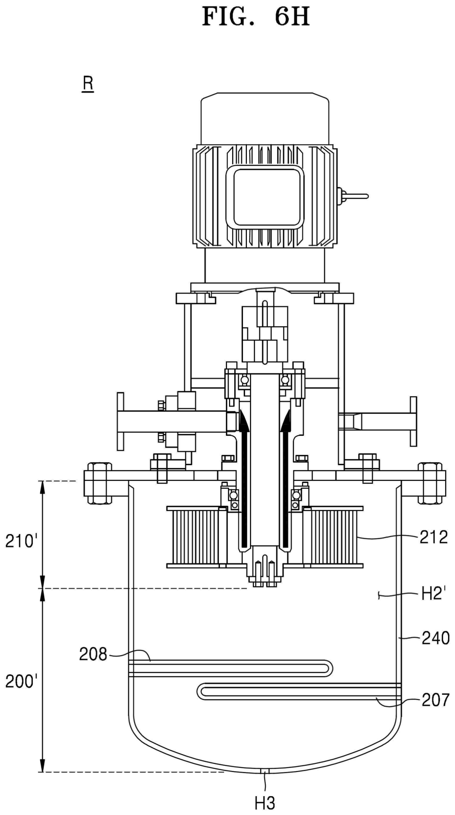

In addition, referring to FIG. 6H, in an embodiment, the heating region 200' may include a first heating part 207 and a second heating part 208, and two or more heating parts 207 and 208 may be arranged on the left surface and the opposite surface of the entire housing 240, and although not illustrated in the drawings, both the first heating part 207 and the second heating part 208 may be arranged on the left surface or the right surface.

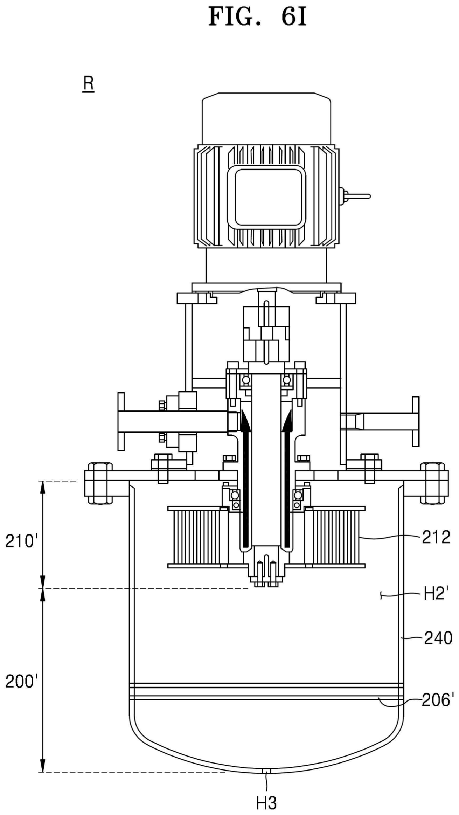

In addition, referring to FIG. 6I, in another embodiment, the heating region 200' may include a heating part 206' arranged in a lower area thereof. The heating part 206' may include a heating rod or a heating plate connected from one surface to another surface of the internal housing 240. Here, in an optional embodiment, the heating plate may include heating through-holes (not shown) through which the absorbents may pass.

Referring to FIGS. 6E to 6I, a central area of a lower area of the heating unit 200 or the heating region 200' may be concave. In an optional embodiment, a hole H3 through which the absorbents may be discharged may be provided in a central area of a lower surface of the heating unit 200 or the heating region 200', and in this case, the central area may be concave so as to discharge the absorbents more efficiently.

Hereinafter, a rotor that may be included in the absorption module A and the regeneration module R will be described. Rotors used in the absorption module A and the regeneration module R may have the same structure except that positions where driving bodies for transmitting power are arranged and specific sizes or scales of the rotors are different.

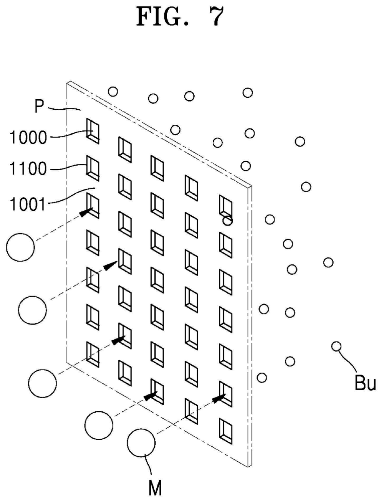

FIG. 7 is a conceptual diagram illustrating an operating principle of a rotor, according to an embodiment.

Referring to FIG. 7, when absorbents are sprayed to the outside of a rotor (not shown) through through-holes 1000, the absorbent collides with one area 1001 of the rotor (not shown) around the through-holes 1000 or edge areas 1100 of the through-holes 1000, and accordingly, the absorbents are divided from large agglomerated particles M into smaller droplets Bu.

Here, in an embodiment, the rotor may refer to the absorption rotor 140 in the absorption module and the regeneration rotor 212 in the regeneration module, and the through-holes 1000 may refer to the absorption through-holes 150 in the absorption module A or the regeneration through-holes in the regeneration module R.

In the above process, the absorbents may have a larger surface area, resulting in an increase in the surface area in which the absorbents may come into contact with carbon dioxide in exhaust gas, and ultimately, solubility of carbon dioxide may be improved.

In an embodiment, in a rotor RP, at least one through-hole 1000 may be arranged along an outer surface area of the rotor RP. Here, the through-hole 1000 may have a circular or polygonal shape, and the shape of the through-hole 1000 is not particularly limited.

In an embodiment, the through-hole 1000 may have one area ratio of 0.3 to 0.5 relative to the total area of a side surface area of the rotor RP, and the area ratio may be 0.3 to 0.5, 0.31 to 0.5, 0.33 to 0.5, 0.36 to 0.5, 0.39 to 0.5, 0.42 to 0.5, 0.45 to 0.5, 0.48 to 0.5, 0.3 to 0.45, 0.31 to 0.45, 0.33 to 0.45, 0.36 to 0.45, 0.39 to 0.45, 0.42 to 0.45, 0.3 to 0.40, 0.31 to 0.40, 0.33 to 0.40, 0.36 to 0.40, or 0.39 to 0.40.

When the area ratio of the through-hole 1000 is less than 0.3, the through-hole 1000 is formed too small, such that the absorbent is not sufficiently sprayed to the outside, and thus, sufficient solubility of carbon dioxide may not be secured, and when the area ratio of the through-hole 1000 is greater than 0.5, the through-hole 1000 is formed too large, such that sufficiently small droplets are not formed when spaying the absorbent, and thus, sufficient solubility of carbon dioxide may not be secured.

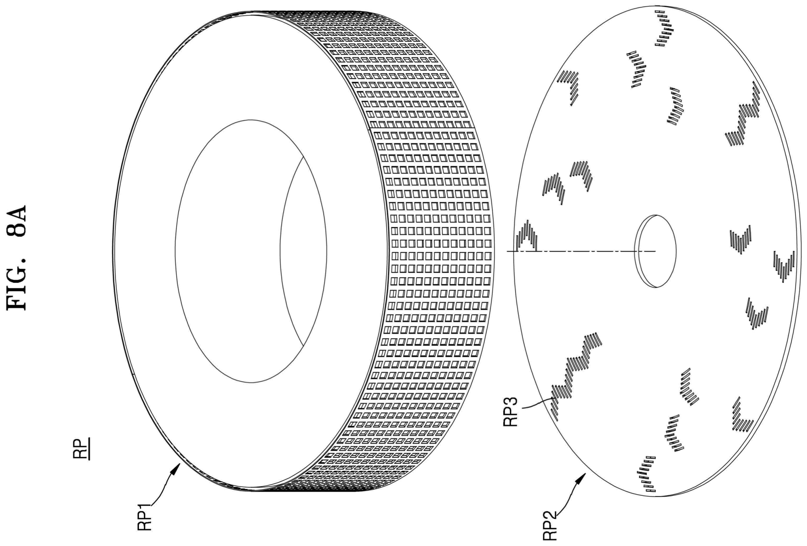

FIGS. 8A to 8C are perspective views illustrating a rotor of an absorption module or a regeneration module, according to an embodiment.

The drawings illustrate a rotor, and as described above, the rotor may be used for the absorption rotor 140 of the absorption module A or the regeneration rotor 212 of the regeneration module R.

Referring to FIGS. 8A to 8C, in an embodiment, the rotor RP may have a form including a structure in which at least one plate is coupled, attached, or arranged. By including the structure in which at least one plate is coupled, attached, or arranged in this way, when the absorbent is discharged from the inside to the outside of the rotor RP, the liquid may be allowed to collide with the plates more frequently, and through this, carbon dioxide may be more efficiently dissolved in the absorbent.

Referring to FIG. 8A, in an embodiment, the rotor RP may include a plate assembly part RP1 and a rotation coupling part RP2. By adopting the above structure, the rotor RP may be more readily coupled to a power transfer part (not shown) providing rotational power to the rotor RP.

In an embodiment, the plate assembly part RP1 may include at least one through-hole 1000 arranged along a surface area thereof. As described above, by adopting the above structure, the absorbent accommodated therein may be discharged to the outside of the rotor RP through the through-hole 1000 to induce contact between the absorbent and the exhaust gas or flue gas, thereby improving solubility of carbon dioxide in the absorbent.

In an embodiment, the rotation coupling part RP2 is a component that connects the plate assembly part RP1 to a power transfer part (not shown) that transmits power for the rotor RP to rotate. By arranging the rotation coupling part RP2 in one area of the rotor RP, the rotor RP may be more stably connected to the power transfer part (not shown), and the rotor RP may be prevented from deviating from the central axis of rotation even during high-speed rotation.

In an embodiment, the rotation coupling part RP2 may be in the form of a plate. By configuring the rotation coupling part RP2 in the form of a plate, a coupling area with the plate assembly part RP1 may be increased, and by adopting the above structure, the rotor RP may be prevented from deviating from the central axis of rotation even when the rotor RP rotates at a high speed.

In an embodiment, the rotation coupling part RP2 may be in the form of a plate including at least one coupling groove RP3 in one area thereof. The coupling groove RP3 may be arranged at a position corresponding to a protrusion J provided in one area of the plate assembly part RP1, and by fitting the protrusion J provided in the plate assembly part RP1 into the coupling groove RP3, the plate assembly part RP1 may be prevented from slipping and deviating from the central axis even upon rotation of the rotor RP.

In an embodiment, the rotation coupling part RP2 may include a plurality of coupling grooves RP3, and the plurality of coupling grooves RP3 may be arranged in a V-shape to form a group of coupling grooves. A vertex of the group of coupling grooves arranged in the V-shape may be directed in the rotation direction of the rotor RP, and by adopting the above structure, coupling of the plate assembly part RP1 with the rotation coupling part RP2 may be firmly maintained more stably even when the rotor RP rotates at a high speed.

In an embodiment, the coupling groove RP3 provided in the rotation coupling part RP2 and the protrusion J provided in one area of the plate assembly part RP1 may be engaged with each other via fitting, and then coupled to each other more firmly by a method such as welding.

In an embodiment, although not illustrated in the drawings, the rotation coupling part RP2 may be in the form of a plate having a concave central part. As will be described below, the plate assembly part RP1 may have various shapes such as a cylindrical shape or a spherical shape, and the rotation coupling part RP2 may have various shapes to correspond to the plate assembly part RP1 having various shapes.

In an embodiment, although not illustrated in the drawings, the rotation coupling part RP2 may further include a buffer member (not shown) arranged between the plate assembly part RP1 and the rotation coupling part RP2. The buffer member (not shown) is not particularly limited, and any buffer member (not shown) including a material capable of buffering friction between metals easily selectable by a person skilled in the art should be interpreted as falling within the scope of the present disclosure.

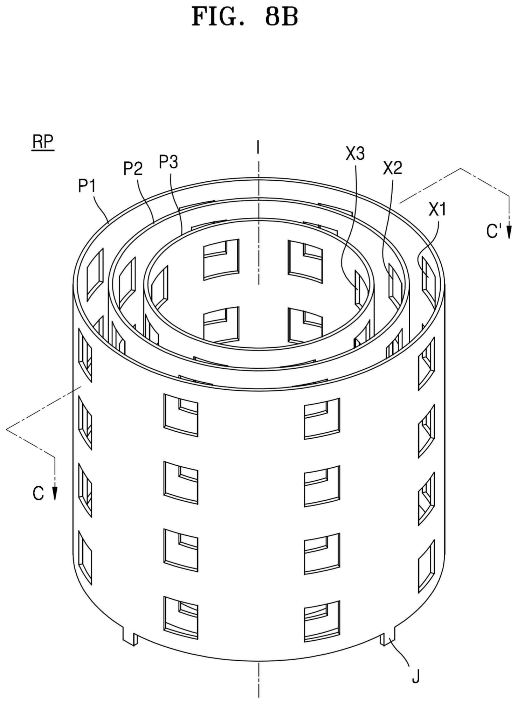

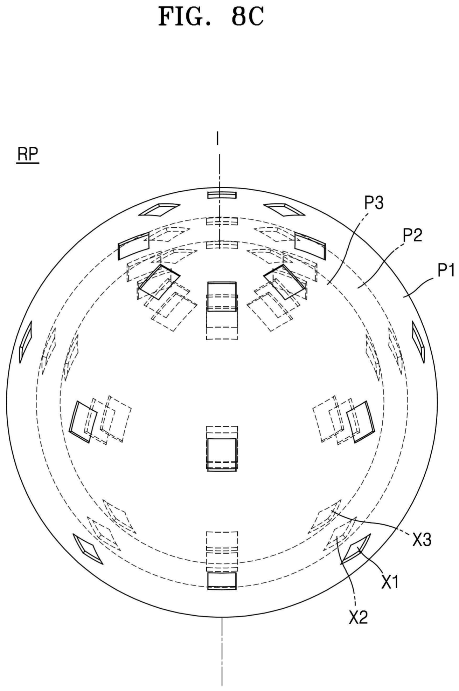

Referring to FIGS. 8B and 8C, in an embodiment, the plate assembly part RP1 may include a first plate P1 to a third plate P3, and each plate may independently have a shape such as a cylindrical shape or a spherical shape. For descriptions of the shapes, coupling structure, and the like of the plates, reference is made to descriptions of the rotor RP to be provided below.

In an embodiment, the rotor RP may include the first plate P1 to the third plate P3. The first plate P1 to the third plate P3 may be arranged or stacked around a common central axis.

In an embodiment, the rotor RP may include the first plate P1, the second plate P2 arranged along an inner circumferential area of the first plate P1, and the third plate P3 arranged along an inner circumferential area of the second plate P2. Here, in an optional embodiment, the second plate P2 may be arranged to be spaced apart from the first plate P1 by a predetermined distance, and the third plate P3 may be arranged to be spaced apart from the second plate P2 by a predetermined distance.

In an embodiment, the rotor RP may include the first plate P1, the second plate P2 arranged to be spaced apart from the first plate P1 by a predetermined distance and parallel to an inner surface of the first plate P1, and the third plate P3 arranged to be spaced apart from the second plate P2 by a predetermined distance and parallel to an inner surface of the second plate P2.

In an embodiment, the first plate P1 to the third plate P3 may include cylindrical plates, and as another example, may include spherical plates. However, the first plate P1 to the third plate P3 are not limited to cylindrical or spherical plates, and may be implemented in various shapes such as a polyhedral shape, and their shapes are not limited to the above examples.

In an embodiment, the rotor RP includes the first plate P1 to the third plate P3, and all of the first plate P1 to the third plate P3 may have a single rotation axis I. By configuring the plurality of plates P1, P2, and P3 to rotate around the single rotation axis I in this way, contact or collision between the plates or contact or collision between the plates and a housing C1 may be prevented even when the plurality of plates P1, P2, and P3 rotate within the housing C1.

In an embodiment, in the rotor RP, the first plate P1 to the third plate P3 include cylindrical or spherical plates, and the first plate P1 to the third plate P3 may be concentrically arranged. By concentrically arranging the first plate P1 to the third plate P3 in this way, contact or collision between the plates or contact or collision between the plates and the housing C1 may be prevented even when the plurality of plates P1, P2, and P3 rotate within the housing C1.

By adopting the above structure, the rotor RP may rotate stably even during repeated rotation, and further, the absorbents may be more stably discharged to the outside of the rotor RP.

In an embodiment, the rotor RP includes the first plate P1 to the third plate P3, and all of the first plate P1 to the third plate P3 may rotate in the same direction. By configuring all of the first plate P1 to the third plate P3 to be coupled to a single rotation coupling part RP2, they may be controlled to rotate in the same direction, whereby the rotor may rotate more stably at a high speed, and the rotor RP may provide a stronger centrifugal force.

In an embodiment, the rotor RP includes the first plate P1 to the third plate P3, and at least one plate among the first plate P1 to the third plate P3 may rotate in the opposite direction. By adopting the above structure, first through-holes X1 to third through-holes X3 included in the first plate P1 to the third plate P3, respectively, may rotate independently, thereby inducing more collisions when the absorbent flows out, and through this, solubility of carbon dioxide in the absorbent may be increased.

In an embodiment, although not illustrated in the drawings, the rotation coupling part RP2 includes a first fixing part (not shown) to a third fixing part (not shown), and the first fixing part (not shown) to the third fixing part (not shown) may be fixed to the first plate P1 to the third plate P3, respectively. By adopting the above structure, rotation of the first plate P1 to the third plate P3 may be controlled independently.

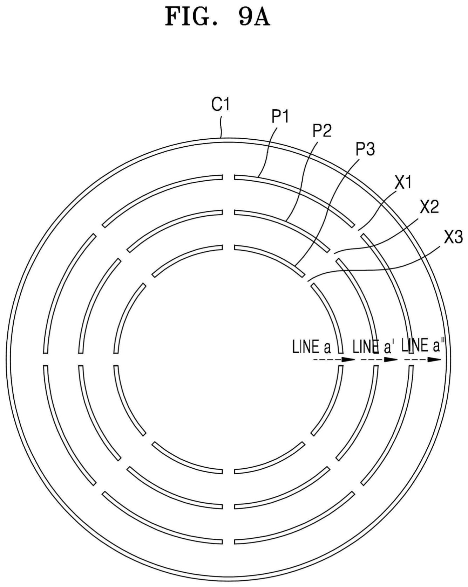

FIGS. 9A to 9C are cross-sectional views of a rotor according to an embodiment.

In FIGS. 9A to 9C, for convenience of description, cross-sectional views of the rotor and a housing C1 in which the rotor is accommodated are shown.

Referring to FIGS. 9A to 9C, in an embodiment, at least one through-hole 1000 is arranged along an outer surface of the rotor RP. In addition, the rotor RP may include the first plate P1 to the third plate P3, and in this case, the first plate P1 to the third plate P3 may include at least one first through-hole X1 to at least one third through-hole X3, respectively.

Referring to FIG. 9A, in an embodiment, an imaginary first line (line a") passing through at least one first through-hole X1 and the rotation axis of the rotor RP, an imaginary second line (line a') passing through at least one second through-hole X2 and the rotation axis of the rotor RP, and an imaginary third line (line a) passing through at least one third through-hole X3 and the rotation axis of the rotor RP may be parallel to each other.

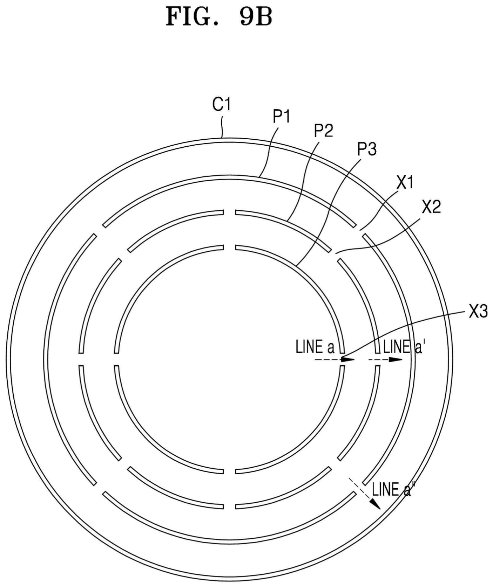

Referring to FIG. 9B, in an embodiment, at least two lines among the imaginary first line (line a") passing through at least one first through-hole X1 and the rotation axis of the rotor RP, the imaginary second line (line a') passing through at least one second through-hole X2 and the rotation axis of the rotor RP, and the imaginary third line (line a) passing through at least one third through-hole X3 and the rotation axis of the rotor RP may be parallel to each other. By adopting the above structure, the absorbent may collide with more plates when coming out of a central area of the rotor RP to be discharged to an outer area.

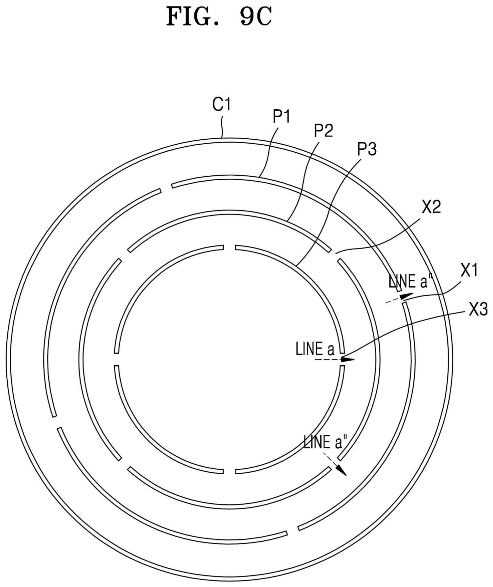

Referring to FIG. 9C, in an embodiment, the imaginary first line (line a") passing through at least one first through-hole X1 and the rotation axis of the rotor RP, the imaginary second line (line a') passing through at least one second through-hole X2 and the rotation axis of the rotor RP, and the imaginary third line (line a) passing through at least one third through-hole X3 and the rotation axis of the rotor RP may be intersect each other.

By adopting the above structure, the absorbent may be discharged to an outer area of the rotor RP via the third through-hole X3, the second through-hole X2, and the first through-hole X1, and further, the number of collisions with the first plate P1 to the third plate P3 may be further increased during the discharge process, such that the absorbents may be divided into smaller particles and solubility of carbon dioxide may be improved along with an increase in a contact area with carbon dioxide.

In an embodiment, although not illustrated in the drawings, the power transfer part (not shown) may be connected to a power source. The power source includes an alternating-current power source or a direct-current power source, and may include any power source for providing sufficient power for rotation of the rotor RP. In addition, the power source may be arranged inside or outside the absorption module A. In addition, the power source is not particularly limited, and any power source easily selectable or adoptable by a person skilled in the art should be interpreted as falling within the scope of the present disclosure.

In an embodiment, referring again to FIG. 3, the power transfer part (not shown) may include a shaft (not shown) connected to a central part of the rotor RP, but is not limited to the above structure, and any power transmission component easily selectable by a person skilled in the art should be interpreted as falling within the scope of the present disclosure.

In an embodiment, the total volume ratio of the absorption rotor 140 included in the absorption module A to the regeneration rotor 212 may be 1.0 to 3.0, as another example, may be 1.2 to 3.0, as another example, may be 1.5 to 3.0, as another example, may be 1.5 to 2.5, and as another example, may be 2.4.

As the total volume of the rotors 140 and 212 increases, the processing capacity increases. Here, whereas the exhaust gas or the like and the absorbent are simultaneously introduced into the absorption rotor 140, the absorbent is introduced into the regeneration rotor 212 as a rich solution, and thus, the total volume of the absorption rotor 140, into which more gas or liquid is introduced, may be made larger than the total volume of the regeneration rotor 212.

When the total volume ratio of the absorption rotor 140 to the regeneration rotor 212 is greater than 3.0, the absorption rotor 140 may be excessively large compared to the total volume of the regeneration rotor 212, and accordingly, manufacturing costs of the absorption module A and process costs of the capture system S1 may excessively increase.

In addition, although not illustrated in the drawings, in an embodiment, the absorption module A and/or the regeneration module R may further include a process monitoring component (not shown), and examples of the process monitoring component (not shown) include a temperature gauge, a flow meter, and/or a pressure gauge. However, the process monitoring component is not limited to the above examples, and any process monitoring component easily selectable by a person skilled in the art should be interpreted as falling within the scope of the present disclosure.

It is a matter of course that the above-described embodiments of the present disclosure may be implemented in combination with each other.

The above descriptions of the present disclosure are provided only for illustrative purposes, and those of skill in the art will understand that the present disclosure may be easily modified into other detailed configurations without modifying technical aspects and essential features of the present disclosure. Therefore, it should be understood that the above-described embodiments are exemplary in all respects and do not limit the scope of the present disclosure. For example, each component described as being unitary may also be implemented in a distributed manner, and similarly, components described as being distributed may be implemented in a combined form.

The scope of the present disclosure is defined by the following claims, and all modifications or alternatives derived from the scope and spirit of the claims and equivalents thereof fall within the scope of the present disclosure.

### <List of Reference Numerals for Major Elements>

A: Absorption module
R: Regeneration module

## Claims

1. A carbon dioxide capture system comprising:
an absorption module configured to mix carbon dioxide gas with an absorbent to form a rich solution, and discharge the formed rich solution; and
a regeneration module configured to receive the discharged rich solution and recover carbon dioxide from the rich solution,
wherein at least one of the absorption module and the regeneration module includes a rotary structure.

2. The carbon dioxide capture system of claim 1, further comprising an oxygen remover configured to remove oxygen in the absorbent.

3. The carbon dioxide capture system of claim 1, further comprising a heat exchanger,
wherein the rich solution discharged from the absorption module is transferred to one area of the heat exchanger,
a part of the absorbent discharged from the regeneration module is transferred to one area of the heat exchanger, and
heat exchange occurs between the rich solution discharged from the absorption module and the absorbent discharged from the regeneration module.

4. The carbon dioxide capture system of claim 1, wherein the absorption module includes:
an external absorption housing; and
an absorption rotor arranged in one area inside the external absorption housing and configured to rotate within the external absorption housing, and
at least one absorption through-hole is arranged along an outer surface of the absorption rotor.

5. The carbon dioxide capture system of claim 1, wherein the regeneration module includes a regeneration unit and a heating unit,
the rich solution is transferred into the regeneration unit,
the carbon dioxide is separated from at least a part of the rich solution, and
the heating unit is arranged in one area of the regeneration unit, and configured to receive the rich solution from the regeneration unit and heat the transferred rich solution.

6. The carbon dioxide capture system of claim 5, wherein the heating unit includes an ultrasonic irradiation unit arranged in one area inside the heating unit and configured to irradiate the absorbent with ultrasonic waves.
